# EUROPÄISCHE PATENTSCHRIFT

(11) **EP 2 928 739 B1**
(45) Veröffentlichungstag und Bekanntmachung des Hinweises auf die Patenterteilung: **20.07.2016**
(21) Anmeldenummer: 13799619.5
(22) Anmeldetag: 06.12.2013
(51) Int. Cl.: B60T 13/52, B60T 17/02

(54) **VERFAHREN ZUR UNTERDRUCKVERSORGUNG EINES PNEUMATISCHEN BREMSKRAFTVERSTÄRKERS EINES KRAFTFAHRZEUG-BREMSSYSTEMS**
METHOD FOR THE VACUUM SUPPLY FOR A PNEUMATIC BRAKE BOOSTER OF A MOTOR VEHICLE BRAKING SYSTEM
PROCÉDÉ D'ALIMENTATION EN VIDE D'UN SERVOFREIN À DÉPRESSION PNEUMATIQUE D'UN SYSTÈME DE FREINAGE DE VÉHICULE AUTOMOBILE

(30) Priorität: 07.12.2012 DE 102012222545
(43) Veröffentlichungstag der Anmeldung: 14.10.2015
(73) Patentinhaber: Continental Teves AG & Co. OHG, 60488 Frankfurt (DE)
(72) Erfinder: KALBECK, Alexander, 93133 Burglengenfeld (DE); PFAFFENEDER, Bernd, 93055 Regensburg (DE); STÜRZER, Jürgen, 94330 Aiterhofen (DE)
(86) Internationale Anmeldenummer: PCT/EP2013/075849
(87) Internationale Veröffentlichungsnummer: WO 2014/086995

(56) Entgegenhaltungen:
- WO-A1-02/34601
- WO-A1-2005/123476
- WO-A1-2007/082932
- US-A1- 2005 165 522

## Beschreibung

Die Erfindung betrifft ein Verfahren zur Unterdruckversorgung eines pneumatischen Bremskraftverstärkers einer Kraftfahrzeug-Bremsanlage mit den Merkmalen vom Oberbegriff vom Patentanspruch 1.

### Stand der Technik:

Bremsanlagen moderner Kraftfahrzeuge werden oft mit den pneumatischen Bremskraftverstärkern ausgestattet. Solche Bremsanlagen benötigen zur einer ordnungsgemäßen Bremskraftentfaltung Unterdruck, welcher vielfach durch dedizierte Pumpenaggregate verfügbar gemacht werden muss. Weil eine stetige Verfügbarkeit von jederzeit ausreichender Bremskraft im hohen Maße sicherheitsrelevant ist, werden an die Unterdruckversorgung besonders hohe Anforderungen hinsichtlich dessen Zuverlässigkeit gestellt, was eine permanente Überwachung des für den Bremskraftverstärker verfügbaren Unterdruckniveaus voraussetzt.

Aus Kraftfahrzeugen sind Bremsanlagen mit pneumatischen differenzdruckgesteuerten Bremskraftverstärkern bekannt, welche über elektromotorisch angetriebene Pumpenaggregate mit hubartig bewegbaren Verdrängerelementen zur einer zumindest unterstützenden Unterdruckversorgung des Bremskraftverstärkers verfügen und bei denen das Unterdruckniveau mittels redundant ausgeführten Drucksensoren gemessen wird. Die Funktionsüberwachung der Bremsanlage sowie Steuerung des Pumpenaggregats hängen somit von den Signalen der Drucksensoren ab. Um Messungssicherheit zu erhöhen und Drucksensorfehler rechtzeitig zu diagnostizieren, werden die durch zwei Drucksensoren simultan aufgenommenen Werte miteinander verglichen und so auffällige inplausible Signale eines der Sensoren erkannt.

In der WO2005/123476 A1 ist ein Verfahren zur Unterdruckversorgung eines pneumatischen Bremskraftverstärkers durch ein elektrisch angetriebenes Pumpenaggregat in einem Fahrzeug offenbart. Dabei wird eine Drehzahl des Pumpenaggregats abhängig von Fahrzuständen des Fahrzeugs gesteuert, um Störgeräusche zu minimieren.

Ein intensiver Kosten- und Bauraumeinsatz, bedingt durch die Verwendung von 2 Drucksensoren mit zugehörigen Anschlüssen und Leitungen sowie erforderliche Auswertungs- und Steuerungshardware wird als insgesamt verbesserungswürdig angesehen.

### Aufgabe:

Es stellt sich daher die Aufgabe, ein Verfahren zur Unterdruckversorgung anzubieten, welches die notwendige hohe Zuverlässigkeit der Funktionsüberwachung sicherstellt, gleichzeitig einen Kostenvorteil gegenüber dem Stand der Technik bietet und Vorrichtungen mit einer geringeren Bauraumbeanspruchung ermöglicht.

### Lösung und Vorteile:

Die Aufgabe wird erfindungsgemäß dadurch gelöst, dass das Signal des signalemittierenden Drucksensors erfindungsgemäß selbst als Quelle für seine Plausibilisierung verwendet wird, indem aus dem Signal eine dem gemittelten Druckwert zugeordnete Druckwertamplitude dU ermittelt wird, wobei die Druckwertamplitude eine Differenz zwischen einem Druckwert-Maximum und einem Druckwert-Minimum innerhalb eines Hubes des Verdrängerelements darstellt, und nachfolgend mit einem a priori bekannten zulässigen Vergleichswert für die Druckwertamplitude verglichen wird. Übersteigt eine Abweichung der Druckwertamplitude von dem Vergleichswert einen definierten Betrag, kann der Signal für nicht plausibel bzw. inplausibel erklärt werden.

Dadurch kann vorteilhafterweise auf einen weiteren Drucksensor samt zugehörigen Steckers und Leitung verzichtet werden, die elektronische Steuerungseinheit kann platzspareder, einfacher und kostengünstiger ausgelegt werden. Gleichzeitig wird eine einfache und zuverlässige Fehlerüberwachung und Diagnose ermöglicht, Funktionsbereitschaft des Pumpengeräts wird erhöht. Gleichzeitig kann die EMV-Stabilität des Gesamtsystems durch Einsparung von Elektronikkomponenten und stromführenden elektrischen Leitungen verbessert werden.

In einer vorteilhaften Weiterbildung der Erfindung können mehrere Vergleichswerte in einem Kennfeld in der elektronischen Steuereinheit abgespeichert sind, wobei das Kennfeld einem Wertebereich von Druckwert p zugeordnet ist, welcher in dem Bremskraftverstärker erzeugt werden kann. Damit wird eine besonders vorteilhafte, weil jederzeit und in nahezu sämtlichen Betriebspunkten mögliche, kontinuierliche Plausibilisierung des Drucksensorsignals ermöglicht.

Eine besonders zuverlässige Bewertung des Sensorsignals kann erfindungsgemäß erreicht werden, indem das Signal des Drucksensors erst dann als inplausibel definiert wird, wenn die Abweichung der Druckwertamplitude von dem Vergleichswert in einer konfigurierbaren Anzahl von Fällen einen definierten Betrag übersteigt.

Eine rechtzeitige Erkennung einer Inplausibilität des Signals kann vorteilhafterweise ermöglichen, dass die elektronische Steuereinheit eine Reaktionsaktivität zum Warnen des Fahrers oder zum Beeinflussen einer Motor- oder einer Bremsansteuerung oder zum setzen eines Fehlerkodes initiiert, beispielsweise eine Warnbenachrichtigung des Fahrers oder eine Aktivierung eines gesonderten Motor- oder Bremsanlagesteuerprogramms. Dadurch kann Verkehrssicherheit erhöht und der Fahrer auf ein mögliches Problem hingewiesen werden, eine Gefahr von Schäden am Fahrzeug oder gar Unfällen kann signifikant vermindert werden.

In den vorteilhaften Weiterbildungen der Erfindung können die zur Plausibilisierung des Signals erforderliche Vergleichswerte bzw. Kennfelder vor einer ersten Inbetriebnahme des Pumpengaggregats berechnet oder aufgezeichnet und nachfolgend in der elektronischen Steuereinheit abgespeichert werden, so dass diese bei der ersten Inbetriebnahme bereits vorliegen. Ebenso ist es jedoch möglich, die Vergleichswerte oder Kennfelder während einer ersten Inbetriebnahme, beispielsweise einem Testlauf des Pumpengaggregats in einer geeigneten Vorrichtung oder aber auch während einer ersten Inbetriebnahme einer nachweislich intakten Bremsanlage aufzuzeichnen und in der elektronischen Steuereinheit abzuspeichern. Damit kann zuverlässig sichergestellt werden, dass die Vergleichswerte bzw. die Kennfelder möglichst genau der jeweiligen Bremsanlage entsprechen und somit eine besonders zuverlässige Plausibilisierung möglich ist.

In weiteren vorteilhaften Weiterbildungen des erfindungsgemäßen Verfahrens kann die Plausibilisierung kurzzeitig für eine konfigurierbare Dauer deaktiviert werden. Dies ist besonders wichtig bei bestimmten hochdynamischen Ereignissen wie beispielsweise eine Betätigung des Bremskraftverstärkers durch Betätigungselemente oder Aggregate, ein Anlauf des Pumpenaggregats, ein Kaltstart des Motors des Kraftfahrzeugs, einer Betätigung einer Handbremse, einer Über- bzw. Unterspannung oder Spannungspulse in einem elektrischen Bordnetz des Kraftfahrzeugs, oder weiteren Ereignissen, welche einen Signal des Drucksensors kurzzeitig, jedoch wesentlich beeinflussen können.

Damit können Fehleinschätzungen aufgrund eines nicht vordefinierten Verhaltens des Signals ausgeschlossen werden, was letztlich zu einer hohen Systemrobustheit und Zuverlässigkeit führt. Eine besonders vorteilhafte Vorrichtung zum Ausführen des erfindungsgemäßen Verfahrens kann über ein Pumpenaggregat mit zwei gegenläufig synchron bewegbaren Verdrängerelementen in einer Boxeranordnung verfügen, wobei die Verdrängerelemente an ihren Enden elastische Membranelemente aufweisen, und wobei ein einzelner Drucksensor zur Überwachung von einer Druckdifferenz zwischen wenigstens einer Arbeitskammer und wenigstens einer Unterdruckkamer des Bremskraftverstärkers oder eines in wenigstens einer Unterdruckkamer des Bremskraftverstärkers herrschenden Druckes, sowie zur Plausibilisierung des Signals des Drucksensors vorgesehen sein kann.

Damit kann eine zuverlässige, schwingungsarme, leise und dabei wartungsfreie und verschleißarme Unterdruckversorgung garantiert werden.

### Figurenbeschreibung:

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:
Fig.1 ein Teil eines zur Anwendung des erfindungsgemäßen Verfahrens geeigneten Bremsanlage in einer stark vereinfachten Prinzipdarstellung.
Fig.2 Beispiel eines in eines zur Anwendung des erfindungsgemäßen Verfahrens geeigneten Pumpenaggregates in einer Schnittdarstellung
Fig.3 Abbild eines in dem erfindungsgemäßen Verfahren aufgenommenen Sensorsignals.
Fig.4 eine vereinfachte Darstellung eine Zusammenhang zwischen dem nativen Sensorsignal, dem Druckwert p der Druckwertamplitude dU(p).

### Fig.1

Weil der Aufbau und Funktionsweise von wesentlichen Komponenten einer hydraulischen Bremsanlage mit einem pneumatischen Bremskraftverstärker, wie beispielsweise eines Hauptbremszylinders oder des Bremskraftverstärkers selbst, hinlänglich bekannt sind, wird nachfolgend auf deren genaue Erläuterung verzichtet, sofern dies nicht wesentlich für die Erfindungsbeschreibung erscheint.

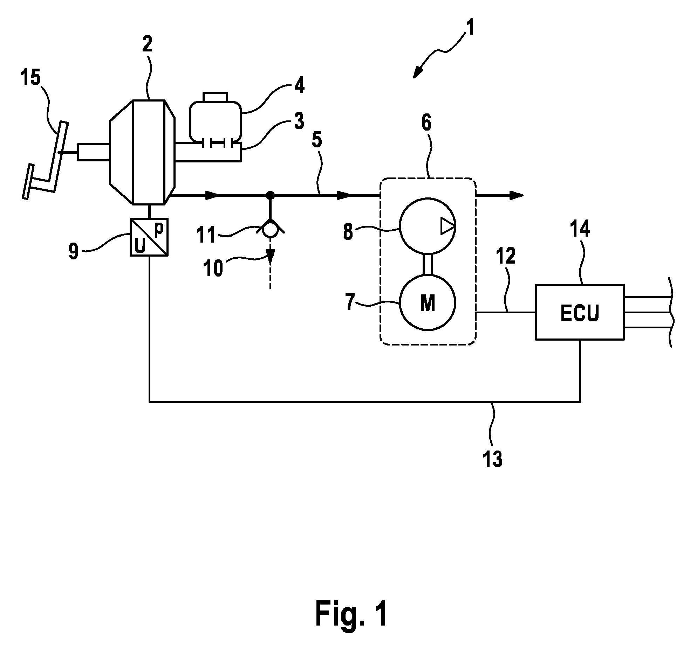

Das in der Fig.1 gezeigte Teil eines vorzugsweise in einem Kraftfahrzeug verbauten Bremsanlage 1 weist einen pneumatischen Bremskraftverstärker 2 mit wenigstens einer nicht gezeigten beweglichen Wand, welche den Innenraum den Bremskraftverstärkers 2 in wenigstens eine Verstärkerarbeitskammer und wenigstens eine Verstärkerunterdruckkammer aufteilt und deren Bewegung durch eine Druckdifferenz auf beiden Seiten der Wand steuerbar und die Position durch eine geeignete Vorrichtung jederzeit bestimmbar ist, einen mit dem Bremskraftverstärker 2 verbundenen Hauptbremszylinder 3, einen an dem Hauptbremszylinder 3 befestigten und an diesen hydraulisch angeschlossenen Druckmittelausgleichsbehälter 4, ein über eine Unterdruckleitung 5 an den Bremskraftverstärker 2 angeschlossenes Pumpenaggregat 6, wobei das Pumpenaggregat 6 über einen elektrischen Antrieb 7 und eine Pumpe 8 verfügt, einen Drucksensor 9 zur verzögerungsfreien Überwachung des vorliegenden Unterdruckniveaus, auf. Über eine weitere Unterdruckleitung 10 kann eine weitere, nicht gezeigte Unterdruck-Versorgungsquelle wie ein Saugrohr eines Otto-Saugmotors, an den Bremskraftverstärker 2 angebunden werden. Ein Rückschlagventil 11 sorgt dabei für die Trennung der weiteren Versorgungsquelle von dem Pumpenaggregat 6. Die elektrischen Leitungen 12 bzw. 13 gewährleisten eine elektrische Anbindung des Pumpenaggregats 6 bzw. des Drucksensors 9 an eine elektronische Steuereinheit 14, welche ihrerseits mit weiteren nicht gezeigten Komponenten verbunden ist und zur Steuerung des Pumpenaggregates 6 sowie zur Auswertung eines Signals des Drucksensors 9 geeignet ist. Es ist auch möglich weitere elektronische Steuereinheiten zwischen dem Drucksensor 9 und des Steuereinheit 14 bzw. zwischen dem Pumpenaggregat 6 und der Steuereinheit 14 vorzusehen ohne die Erfindung zu verlassen.

Das gezeigte System ist derart ausgelegt, dass zur einer ordnungsgemäßen Bremsfunktion das Unterdruckniveau bzw. Druckwert p in der Verstärkerunterdruckkammer niemals einen definierten kritischen Grenzwert verletzen darf und hierfür bei einer betriebsbereiten Bremsanlage permanent überwacht wird. Zur Einhaltung des definierten Grenzwertes wird das Pumpenaggregat 6 bei Bedarf ein- oder ausgeschaltet. Ferner kann der Druckwert p aufgrund einer technisch-konstruktiven Auslegung von verwendeten Komponenten lediglich einen begrenzten Wertebereich einnehmen - beispielsweise insgesamt je nach Betriebszustand zwischen 0,2 und 1 Bar liegen.

Es sei noch zu erwähnen, dass das Volumen, welcher mit Unterdruck beaufschlagt wird und im Wesentlichen die Verstärkerunterdruckkammer oder -kammern des Bremskraftverstärkers 2, Unterdruckleitung, Arbeitskammern des Pumpenaggregats und zugeordnete Kanäle beinhaltet, konstruktiv ausgelegt und selbstverständlich in jedem Betriebszustand der Bremsenplage bekannt ist und dadurch eine Analogie eines geschlossenen Reservoirs mit einem darin überall gleichen Druckwert p darstellt.

Die Betätigung des Bremskraftverstärkers 2 erfolgt über ein Betätigungselement 15, welches als ein auf den Bremskraftverstärker 2 einwirkendes Bremspedal ausgeführt ist. Alternativ oder in Kombination mit dem Bremspedal sind auch weitere fahrerseitig oder fahrerunabhängig auslosbare Betätigungselemente innerhalb der Erfindung ebenso möglich und zulässig, beispielsweise elektromechanische, elektromagnetische, elektrohydraulische und weitere Aktuatoren und vergleichbare Aggregate.

Der Hauptbremszylinder 3 wird über nicht gezeigte hydraulische Leitungen und gegebenenfalls unter Zwischenschaltung weiterer hydraulischer oder elektrohydraulischer Aggregate mit ebenfalls nicht gezeigten Radbremsen verbunden.

### Fig.2

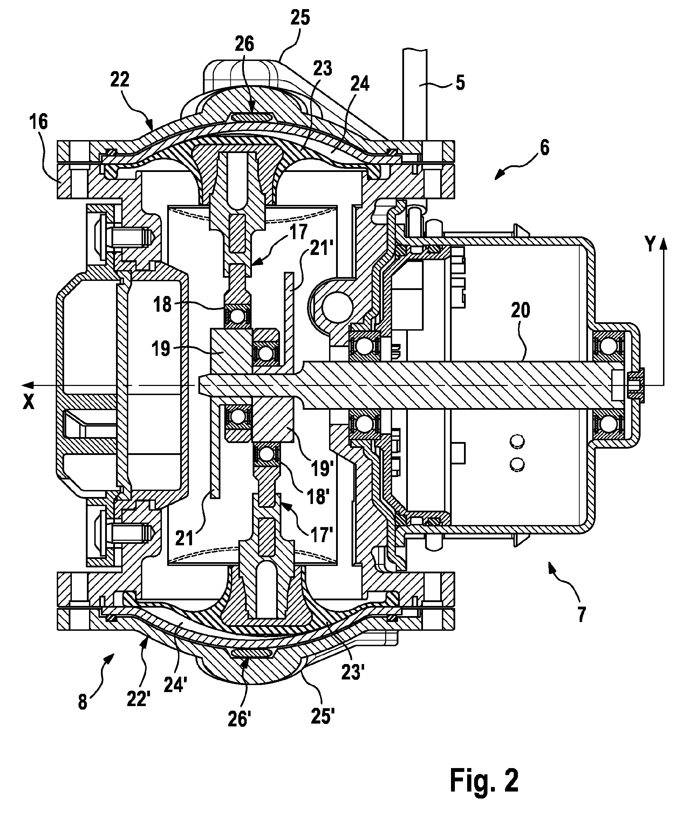

Fig.2 zeigt beispielhaft ein zur Anwendung des erfindungsgemäßen Verfahrens geeignete Pumpenaggregates trockenlaufendes Pumpenaggregat 6 in einem Längsschnitt. Das Pumpenaggregat 6 verfügt über einen elektrischen Antrieb 7 und eine mit dem Antrieb 7 verbundene Pumpe 8. Die Pumpe 8 weist ein Pumpengehäuse 16 auf mit zwei darin angeordneten Verdrängerelementen 17,17' auf. Die Verdrängerelemete 17,17' sind über Lagerelemente 18,18' an Exzenterelementen 19,19' rotierbar angeordnet. Ferner verfügt die Pumpe 8 über zwei am Pumpengehäuse 16 angeordnete Arbeitsraumdeckel 22,22' und die Verdrängerelemete 17,17' über elastische Membranelemente 23,23', welche an ihrem Umfang jeweils zwischen einem Arbeitsraumdeckel 22,22' und dem Pumpengehäuse 16 luftdicht eingespannt sind. Damit werden zwischen den Arbeitsraumdeckeln 22,22' und den Membranelemente 23,23' Arbeitsräume 24,24' begrenzt.

Die Abbildung zeigt, dass die Verdrängerelemente 17,17' in einer Boxeranordnung in der Pumpe 8 positioniert sind. Die Exzenterelemente 19,19' sind um 180° radial und axial gegeneinander versetzt an einer Antriebswelle 20 des Antriebs 7 verdrehsicher fixiert, so dass bei einer Drehung der Antriebswelle 20 um die Rotationsachse X die beiden Verdrängerelemente 17,17' jeweils gegenläufige synchrone Hubbewegungen annähernd entlang der Hubrichtung Y ausführen. Für einen ruhigen Betrieb weisen die Exzenterelemente 19,19' Wuchtelemente 21,21' auf, welche dem Ausgleich einer durch das jeweilige Verdrängerelement 17,17' verursachten Unwucht dienen.

Durch die gegenläufige Hubbewegungen der Verdrängerelemente 17,17' verformen sich die jeweiligen Membranelemente 23,23' abwechselnd in Richtung zum jeweiligen Arbeitsraumdeckeln 22,22' bzw. zurück, so dass sich die jeweiligen Arbeitsräume 24,24' entsprechend verkleinern bzw. vergrößern, wobei in einem oberen Totpunkt des Verdrängerelements 17,17' der Arbeitsraum 24,24' seinen minimalen und in einem unteren Totpunkt seinen maximalen Volumen aufweist.

Die Arbeitsräume 24,24' sind über ein System von integrierten Kanälen 25,25' an die Unterdruckleitung 5 und somit an den Bremskraftverstärker 2 (Fig.1) angebunden. Die mit Plättchen-Rückschlagventilen ausgebildete Ventilanordnungen 26,26' sorgen dafür, dass bei einer arbeitsraumvergrößernden Hubbewegung des Verdrängerelements 17,17' die Luft über die Unterdruckleitung 5 in den jeweiligen Arbeitsraum 24,24' angesaugt und bei einer arbeitsraumverkleinernden Hubbewegung die Luft aus der Arbeitsraum 24,24' in die Umgebungsathmosphäre verdrängt wird. Weil Luft ein kompressibles fluides Medium ist, können bei einem vollständigen Hub des Verdrängerelements 17,17' in den Arbeitsräumen 24,24' und den daran angeschlossenen Unterdruckleitung 5 sowie Bremskraftverstärker 2 lokale Druckwertspitzen gemessen werden, wobei im oberen Totpunkt des Verdrängerelements 17,17' unter Vernachlässigung eine entfernungs- und volumenabhängigen Zeitabweichung ein lokales Druckwert-Maximum und im unteren Totpunkt ein lokales Druckwert-Minimum vorliegen. Die Amplitude zwischen einem, dem einzelnen Hub eines einzelnen Verdrängerelements zugeordneten lokalen Druckwert-Maximum und seinem nächsten Druckwert-Minimum kann als Druckwertamplitude bezeichnet werden.

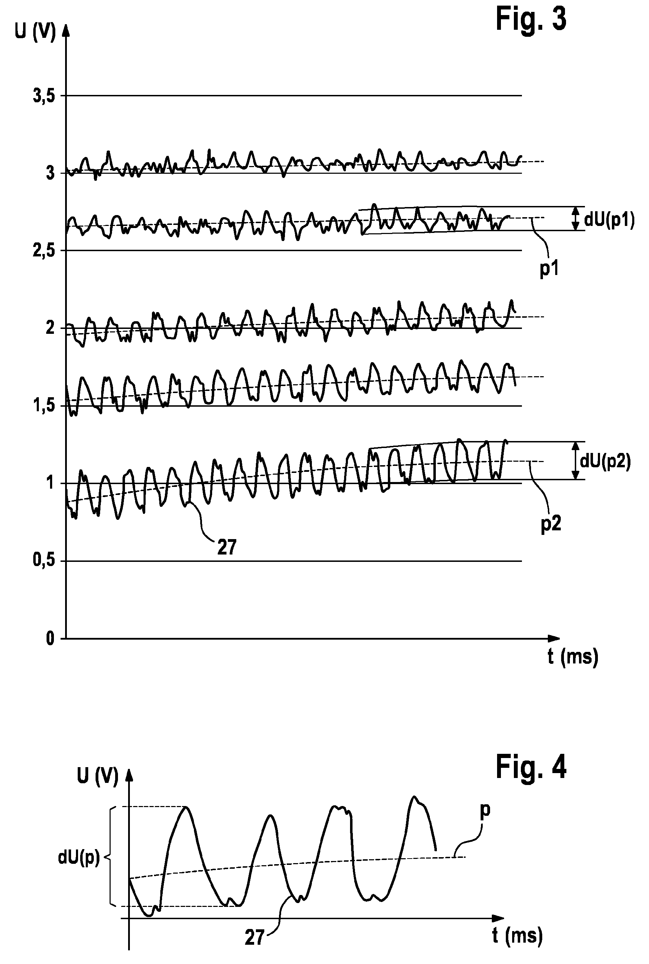

Ein beispielhafter, in einem erfindungsgemäß geeigneten Bremskraftverstärker erfassbarer Druckverlauf während des Betriebes des Pumpenaggregats 6 wird in Fig.3 abgebildet.

### Fig.3

Das Diagramm in der Fig.3 zeigt das Verhalten der vorstehend beschriebenen Druckwertamplitude dU in Abhängigkeit von dem Druckwerte p während eines Betriebes des Pumpenaggregats 6.

Dabei stellt das Diagramm grundsätzlich ein Abbild eines von Drucksensor 9 während eines Zeitabschnitts aufgenommenen Signals, welcher in Form von druckabhängiger elektrischer Spannung U vorliegt. Je geringer der Druckwert p um so höher ist die Spannung U. Zwecks Übersichtlichkeit wurde das sonst übermäßig weit in die Horizontale erstreckendes Diagramm auf eine Seitenbreite gekürzt und einige zur unterschiedlichen Druckbereichen gehörende Signalabschnitte übereinander statt einander folgend dargestellt. Dabei zeigt der unterste Signalabschnitt die Situation am Anfang eines Unterdruckaufbaus bei nahezu atmosphärischem Druck, der oberste Signalabschnitt die Situation bei einem nahezu gesättigten, maximal erreichbaren Unterdruck und weitere Signalabschnitte die Zwischenzustände. Auf der senkrechten Achse ist dabei die elektrische Spannung des Signals U in Volt, auf der waagerechten Achse die Zeit t in Millisekunden aufgetragen. Die aufgenommene Signalkurve 27 des Drucksensors 9 zeigt ein sinusartiges Muster, hervorgerufen durch die die Hubbewegungen der Verdrängerelemente, welche die bereits unter Fig.2 beschriebenen lokale Druckwert-Maxima und Druckwert-Minima verursachen. Eine Amplitude zwischen den genannten Extremwerten lässt sich als Druckwertamplitude dU erkennen und aufnehmen. Eine Ausnutzung des beschriebenen Sachverhalts erlaubt es, ein Verlauf des Signals während eines Hubes des Verdrängerelemente 17,17' zur Diagnose des Drucksensors 9 einzusetzen, da es alleine alle erforderlichen Informationen enthält um über die Plausibilität des Sensorverhaltens in einem bestimmten Betriebspunkt zu entscheiden. Aus dem Verhalten des Druckwertes p bei einem gegebenen Reservoir und bei Hubbewegungen der Verdrängerelemente lässt sich aus dem gezeigten Diagramm ablesen, dass die Druckwertamplitude dU sich über direkte Abhängigkeit des anliegenden Druckwertes p im Reservoir ändert, d.h. mit einem geringeren Druckwert p (gleichbedeutend ein höheres Vakuum) nimmt die Druckwertamplitude dU ab. Die Kurven p1 bzw. p2 bilden ein gefiltertes, zum jeweiligen Druckwert gehörendes Signal ab, welches annähernd einen Mittelwert der jeweiligen Druckwertamplitude dU darstellt. Es ist klar erkennbar, dass die Druckwertamplitude dU(p2) bei einem relativ hohem Druckwert p2 deutlich größer ist als die Druckwertamplitude dU(p1) bei einem relativ niedrigen Druckwert p1 Bei Anlauf des Pumpenaggregats 6 kann die Druckwertamplitude dU(p) gemessen werden und gegen ein bekanntes vorausgerechnetes oder in einer nachweislich einwandfreien Bremsanlage gemessenes grenzwertiges Vergleichswert (Grenzwerte für die jeweilige maximale bzw. minimale zulässige und dem zum Messzeitpunkt ermittelten Druckwert p zugeordnete Druckwertamplitude dU(p)) verglichen werden. Diese Vergleichswerte sind dem System a priori bekannt und beispielsweise in der elektronischen Steuereinheit 14 abgespeichert. Ist die gemessene Druckwertamplitude dU nicht innerhalb der beiden Grenzen (Minimum und Maximum), liegt eine Abweichung vor, welche den zulässigen Betrag übersteigt und das Signal des Drucksensors ist somit als nicht plausibel zu bewerten. Daraus kann entschieden werden, dass die Sensorwerte nicht vertrauenswürdig sind und beispielsweise ein Defekt vorliegt. Darauf basierend können weitere Maßnahmen beziehungsweise Reaktionsaktivitäten, beispielsweise eine Warnbenachrichtigung des Fahrers oder eine Aktivierung eines gesonderten Motor- oder Bremsanlagensteuerprogramms ausgelöst, beispielsweise durch die elektronische Steuereinheit initiiert werden. Dabei ist für die Feststellung der Signalplausibilität keinerlei Vergleichssignal eines weiteten redundanten Sensors erforderlich.

Dieses Verfahren kann bei verschiedenen Druckwerten p wiederholt werden, sofern die zulässigen Vergleichswerte für Druckwertamplitude dU für jeweilige Druckwerte p a priori bekannt sind und gespeichert vorliegen. Somit ist eine kontinuierliche Plausibilisierung der durch den Drucksensor 9 übermittelten Druckwerte möglich.

Beispielsweise können folgende Plausibilisierungen eines einzelnen Drucksensors 9 in einer elektronischen Steuereinheit 14 durchgeführt werden:
a) Ein durchschnittlicher aufgenommener Druckwert p kann gegen einen Druckwert-Minimum und Druckwert-Maximum bei jeweiligen Hüben des Verdrängerelements plausibilisiert werden. Dies bedeutet, dass für eine bestimmte Bremsanlage eine Abhängigkeit p=k(p) verifiziert werden kann, wobei k(p) ein Kennfeld ist.
b) Die vorstehend beschriebene Abhängigkeit kann zwecks einer genaueren Bestimmung erweitert werden zu k(p, p_ext, T, U_m, I_m, a) mit p_ext=aktuell anliegender Außendruck, T=aktuelle Pumpentemperatur oder Umgebungstemperatur, U_m=aktuelle Motorspannung (bzw. Spannung in dem elektrischen Bordnetz des Kraftfahrzeugs), I_m=aktueller Motorstrom (bzw. Strom in dem elektrischen Bordnetz des Kraftfahrzeugs) a=Lebensauer des Pumpenaggregats (bzw. Betriebsstunden).
c) Ein durchschnittlicher aufgenommener Druckwert p des Drucksensors 9 oder auch Druckwert-Minimum und Druckwert-Maximum bei jeweiligen Hüben des Verdrängerelements können gegen die Druckwertamplitude dU plausibilisiert werden. Dies bedeutet, dass für eine bestimmte Bremsanlage eine Abhängigkeit p=k(p_vac)*A_pump verifiziert werden kann, wobei k(p) ein zu ermittelndes und in einer Steuereinheit 14 gespeichertes Kennfeld darstellt und A_pump eine gemessene Druckwertamplitude während eines Hubes des Verdrängerelements.
d) Die vorstehend beschriebene Abhängigkeit des Kennfeldes kann zur genaueren Bestimmung erweitert werden zu k(p, p_ext, T, U_m, I_m, a) mit p_ext=aktuell anliegender Außendruck, T=aktuelle Pumpentemperatur oder Umgebungstemperatur, U_m=aktuelle Motorspannung (bzw. Spannung in dem elektrischen Bordnetz des Kraftfahrzeugs), I_m=aktueller Motorstrom (bzw. Strom in dem elektrischen Bordnetz des Kraftfahrzeugs), a=Lebensauer des Pumpenaggregats (bzw. Betriebsstunden).
e) Da in hochdynamischen Situationen, beispielsweise bei einer Bremspedalbetätigung, es zu einem nicht vordefiniertem Verhalten der Signale kommen kann, kann in einer erfindungsgemäßen Weiterbildung des Verfahrens zur Vermeidung von Fehlinterpretationen die Plausibilisierung durch oben genannte Verfahren bei folgenden Ereignissen kurzzeitig für eine konfigurierbare Dauer deaktiviert werden:
   - Betätigung des Bremskraftverstärkers 2 durch Betätigungselements 15 oder ein weiteres Aggregat,
   - Anlauf des Pumpenaggregats 6,
   - Kaltstart eines Hauptantriebes des Kraftfahrzeugs, beispielsweise eines Verbrennungsmotors,
   - Betätigung einer Handbremse,
   - Über- bzw. Unterspannung oder Spannungspulse in einem elektrischen Bordnetz des Kraftfahrzeugs,
   - weiteren Ereignissen, welche ein Signal des Drucksensors 9 kurzzeitig, jedoch wesentlich beeinflussen.
f) In einer weiteren Ausführung können die oben beschriebenen Kennfelder automatisch bei einem erstmaligen Anlauf des Pumpenaggregats bestimmt bzw. aufgenommen und in der elektronischen Steuereinheit gespeichert werden.
g) In einer weiteren Ausführung kann zur automatischen Ermittlung eines Kennfeldes eine variierende Spannung, beispielsweise durch PWM (Pulsweitenmodulation), angelegt werden. Die Variation der Spannung kann solange verzögert werden, bis eine Sättigung des Vakuumsignals erreicht wird, so dass die Variation einer Drehzahl beziehungsweise Spannung alleine vom eingespeisten Spannungswert abhängt.

### Fig.4

Das Diagramm in der Fig.4 verdeutlicht in einer vereinfachten Darstellung die Unterschiede zwischen dem eigentlichen nativen Signal des Drucksensors 9, dargestellt durch die Signalkurve 27, dem aus der Signalkurve 27 durch eine Signalauswertung (beispielsweise Filtern, Gleichrichten, Interpolieren oder anderes Verfahren) gewonnenen gemittelten Druckwert p und einer aus der Signalkurve ablesbaren Druckwertamplitude dU(p).

### Bezugszeichen:

- 1: Bremsanlage
- 2: Bremskraftverstärker
- 3: Hauptbremszylinder
- 4: Druckmittelausgleichsbehälter
- 5: Unterdruckleitung
- 6: Pumpenaggregat
- 7: Antrieb
- 8: Pumpe
- 9: Drucksensor
- 10: Unterdruckleitung
- 11: Rückschlagventil
- 12: Elektrische Leitung
- 13: Elektrische Leitung
- 14: Elektronische Steuereinheit
- 15: Betätigungselement
- 16: Pumpengehäuse
- 17,17': Verdrängerelement
- 18,18': Lagerelement
- 19,19': Exzenterelement
- 20: Antriebswelle
- 21,21': Wuchtelement
- 22,22': Arbeitsraumdeckel
- 23,23': Membranelement
- 24,24': Arbeitsraum
- 25,25': Kanal
- 26,26': Ventilanordnung
- 27: Signalkurve
- p,p1,p2: Druckwert
- dU: Druckwertamplitude
- X: Rotationsachse
- Y: Hubrichtung

## Patentansprüche

1. Verfahren zur Unterdruckversorgung eines pneumatischen Bremskraftverstärkers (2) für eine Bremsanlage eines Kraftfahrzeuges durch ein elektromotorisch angetriebenes Pumpenaggregat (6) vom Verdrängertyp, wobei dem Pumpenaggregat (6) wenigstens ein Drucksensor (9) zur Überwachung von einem pneumatischen Druck zugeordnet ist und wobei elektrische Signale des Drucksensors (9) einer elektronischen Steuereinheit (14) zugeführt und zur Druckregelung analysiert und verarbeitet werden, **dadurch gekennzeichnet, dass** folgende Schritte ausgeführt werden:
• Emittieren eines Signals durch den Drucksensor (9) und empfangen des emittierten Signals durch die elektronische Steuereinheit (14), wobei das Signal einen Verlauf eines Druckwertes innerhalb eines Hubes eines Verdrängerelements (17) enthält,
• Ermittlung einer Druckwertamplitude (dU) als eine Differenz zwischen einem Druckwert-Maximum und einem Druckwert-Minimum innerhalb eines Hubes des Verdrängerelements (17), wobei die Druckwertamplitude (dU) aus dem Signal durch Signalanalyse ermittelt wird,
• Ermittlung eines gemittelten Druckwertes (p) aus dem Signal durch Signalanalyse,
• Plausibilisierung des Signals des Drucksensors (9), indem die ermittelte Druckwertamplitude (dU) mit einem abgespeicherten Vergleichswert verglichen und eine Abweichung der Druckwertamplitude (dU) von dem Vergleichswert festgestellt wird und das Signal des Drucksensors (9) als inplausibel definiert wird, wenn die Abweichung einen definierten Betrag übersteigt, wobei der Vergleichswert eine zu erwartende Druckwertamplitude für einen definierten gemittelten Druckwert (p) darstellt.

2. Verfahren nach Anspruch 1 **dadurch gekennzeichnet, dass** mehrere Vergleichswerte in einem Kennfeld in der elektronischen Steuereinheit (14) abgespeichert sind, wobei das Kennfeld dem Wertebereich von Druckwert (p) zugeordnet ist.

3. Verfahren nach Anspruch 1 oder 2 **dadurch gekennzeichnet, dass** das Signal des Drucksensors (9) erst dann als inplausibel definiert wird, wenn die Abweichung der Druckwertamplitude (dU) von dem Vergleichswert in einer konfigurierbaren Anzahl von Fällen einen definierten Betrag übersteigt.

4. Verfahren nach einem der Ansprüche 1-3 **dadurch gekennzeichnet, dass** die elektronische Steuereinheit (14) wenigstes eine Reaktionsaktivität zum Warnen des Fahrers oder zum Beeinflussen einer Motor- oder einer Bremsansteuerung oder zum setzen eines Fehlerkodes initiiert, wenn das Signal des Drucksensors (9) als inplausibel definiert wird.

5. Verfahren nach einem der Ansprüche 1-4 **dadurch gekennzeichnet, dass** das die Plausibilisierung kontinuierlich während des Betriebes des Pumpenaggregats (6) durchgeführt wird.

6. Verfahren nach einem der Ansprüche 1-2 **dadurch gekennzeichnet, dass** die Vergleichswerte oder das Kennfeld vor einer ersten Inbetriebnahme des Pumpengaggregats (6) berechnet oder aufgezeichnet und nachfolgend in der elektronischen Steuereinheit (14) abgespeichert werden.

7. Verfahren nach einem der Ansprüche 1-2 **dadurch gekennzeichnet, dass** die Vergleichswerte oder das Kennfeld während einer ersten Inbetriebnahme des Pumpengaggregats (6) aufgezeichnet und nachfolgend in der elektronischen Steuereinheit (14) abgespeichert werden

8. Verfahren nach einem der Ansprüche 1-2 **dadurch gekennzeichnet, dass** die Vergleichswerte oder das Kennfeld während einer ersten Inbetriebnahme des Bremsanlage aufgezeichnet und in der elektronischen Steuereinheit (14) abgespeichert werden

9. Verfahren nach einem der Ansprüche 1-8 **dadurch gekennzeichnet, dass** die Plausibilisierung für eine konfigurierbare Dauer ausgesetzt werden kann.

10. Verfahren nach Anspruch 9 **dadurch gekennzeichnet, dass** die Plausibilisierung wenigstens bei
• einer Betätigung des Bremskraftverstärkers (2) durch Betätigungselements (15) oder ein weiteres Aggregat oder
• bei einem Anlauf des Pumpenaggregats (6) oder
• bei einem Kaltstart eines Hauptantriebes des Kraftfahrzeugs oder
• bei einer Betätigung einer Handbremse oder
• bei Registrierung einer Über- bzw. Unterspannung oder eines Spannungspulses in einem elektrischen Bordnetz des Kraftfahrzeugs
für eine konfigurierbare Dauer ausgesetzt wird.

11. Verfahren nach Anspruch **2 dadurch gekennzeichnet, dass** das Kennfeld wenigstens einen weiteren Wertebereich umfasst, worin Werte:
• eines anliegenden Außendrucks und/oder
• einer Pumpentemperatur und/oder
• einer Umgebungstemperatur und/oder
• einer Spannung in einem elektrischen Bordnetz des Kraftfahrzeugs und/oder
• eines Stroms in einem elektrischen Bordnetz des Kraftfahrzeugs und/oder
• einer Anzahl der Betriebsstunden des Pumpenaggregats enthalten sind.

12. Pumpenaggregat zur Durchführung des Verfahrens nach Anspruch 1 **dadurch gekennzeichnet, dass** das Pumpenaggregat (6) über zwei gegenläufig synchron bewegbare Verdrängerelemente (17,17') verfügt, wobei die Verdrängerelemente (17,17') in einer Boxeranordnung angeordnet und an ihren Enden elastische Membranelemente (23,23') aufweisen, und wobei ein einzelner Drucksensor (9) zur Überwachung von einer Druckdifferenz zwischen wenigstens einer Arbeitskammer und wenigstens einer Unterdruckkamer des Bremskraftverstärkers (2) oder eines in wenigstens einer Unterdruckkamer des Bremskraftverstärkers (2) herrschenden Druckes, sowie zur Plausibilisierung des Signals des Drucksensors (9) vorgesehen ist.

## Claims

1. Method for supplying a vacuum for a pneumatic brake booster (2) for a motor vehicle brake system by means of an electromotively-driven pump assembly (6) of the displacement type, wherein at least one pressure sensor (9) for monitoring a pneumatic pressure is assigned to the pump assembly (6), and wherein electrical signals of the pressure sensor (9) are fed to an electronic control unit (14) and analyzed and processed in order to regulate the pressure, **characterized in that** the following steps are carried out:
• emission of a signal by the pressure sensor (9) and reception of the emitted signal by the electronic control unit (14), wherein the signal contains a profile of a pressure value within a stroke of an expeller element (17),
• determination of a pressure value amplitude (dU) as a difference between a pressure value maximum and a pressure value minimum within a stroke of the expeller element (17), wherein the pressure value amplitude (dU) is determined from the signal by means of signal analysis,
• determination of an averaged pressure value (p) from the signal by means of signal analysis, and
• plausibility checking of the signal of the pressure sensor (9) **in that** the determined pressure value amplitude (dU) is compared with a stored comparison value, and a deviation of the pressure value amplitude (dU) from the comparison value is detected and the signal of the pressure sensor (9) is defined as implausible if the deviation exceeds a defined absolute value, wherein the comparison value constitutes an expected pressure value amplitude for a defined averaged pressure value (p).

2. Method according to Claim 1, **characterized in that** a plurality of comparison values are stored in a characteristic diagram in the electronic control unit (14), wherein the characteristic diagram is assigned to the value range of the pressure value (p).

3. Method according to Claim 1 or 2, **characterized in that** the signal of the pressure sensor (9) is not defined as implausible until the deviation of the pressure value amplitude (dU) from the comparison value exceeds a defined absolute value in a configurable number of cases.

4. Method according to one of Claims 1-3, **characterized in that** the electronic control unit (14) initiates at least one reaction activity to warn the driver or to influence an engine controller or a brake controller or to set an error code if the signal of the pressure sensor (9) is defined as implausible.

5. Method according to one of Claims 1-4, **characterized in that** the plausibility checking is carried out continuously during the operation of the pump assembly (6).

6. Method according to one of Claims 1-2, **characterized in that** the comparison values or the characteristic diagram are calculated or recorded before the pump assembly (6) is first activated, and are subsequently stored in the electronic control unit (14).

7. Method according to one of Claims 1-2, **characterized in that** the comparison values or the characteristic diagram are recorded during a first activation of the pump assembly (6) and are subsequently stored in the electronic control unit (14).

8. Method according to one of Claims 1-2, **characterized in that** the comparison values or the characteristic diagram are recorded during a first activation of the brake system and are stored in the electronic control unit (14).

9. Method according to one of Claims 1-8, **characterized in that** the plausibility checking can be suspended for a configurable period.

10. Method according to Claim 9, **characterized in that** the plausibility checking is suspended for a configurable period at least
• in the case of activation of the brake booster (2) by activation elements (15) or a further assembly or
• in the case of starting up of the pump assembly (6) or
• in the case of a cold start of a main drive of the motor vehicle or
• in the case of activation of a handbrake or
• in the case of registration of an overvoltage or undervoltage or of a voltage pulse in an electrical on-board power system of the motor vehicle.

11. Method according to Claim 2, **characterized in that** the characteristic diagram comprises at least one further value range containing values:
• of an external pressure which is present and/or
• of a pump temperature and/or
• of an ambient temperature and/or
• of a voltage in an electrical on-board power system of the motor vehicle and/or
• of a current in an electrical on-board power system of the motor vehicle and/or
• of a number of the operating hours of the pump assembly.

12. Pump assembly for carrying out the method according to Claim 1, **characterized in that** the pump assembly (6) has two expeller elements (17, 17') which can move synchronously in opposite directions, wherein the expeller elements (17, 17' ) are arranged in a boxer arrangement and have elastic diaphragm elements (23, 23') at their ends, and wherein a single pressure sensor (9) is provided for monitoring a pressure difference between at least one working chamber and at least one vacuum chamber of the brake booster (2) or a pressure prevailing in at least one vacuum chamber of the brake booster (2), and for checking the plausibility of the signal of the pressure sensor (9).

## Revendications

1. Procédé d'alimentation en vide d'un servofrein à dépression pneumatique (2) pour un système de freinage d'un véhicule automobile par un groupe pompe à entraînement électrique (6) de type volumétrique, au moins un capteur de pression (9) pour surveiller une pression pneumatique étant attribué au groupe pompe (6) et des signaux électriques du capteur de pression (9) étant envoyés à une unité de commande électronique (14) pour être analysés et traités afin de réguler la pression, **caractérisé en ce que** les étapes suivantes sont exécutées :
• émission d'un signal par le capteur de pression (9) et réception du signal émis par l'unité de commande électronique (14), le signal comprenant un profil d'une valeur de pression à l'intérieur d'une course d'un élément volumétrique (17),
• détermination d'une amplitude de valeur de pression (dU) sous la forme d'une différence entre une valeur de pression maximum et une valeur de pression minimum à l'intérieur d'une course de l'élément volumétrique (17), l'amplitude de valeur de pression (dU) étant déterminée à partir du signal par analyse des signaux,
• détermination d'une valeur de pression (p) moyenne à partir du signal par analyse des signaux,
• contrôle de vraisemblance du signal du capteur de pression (9), en comparant l'amplitude de valeur de pression (dU) déterminée à une valeur de comparaison mémorisée et en constatant un écart de l'amplitude de valeur de pression (dU) par rapport à la valeur de comparaison et le signal du capteur de pression (9) étant défini en tant que non plausible, si l'écart dépasse un montant défini, la valeur de comparaison présentant une amplitude de valeur de pression à attendre pour une valeur de pression (p) moyenne définie.

2. Procédé selon la revendication 1, **caractérisé en ce que** plusieurs valeurs de comparaison sont mémorisées dans une zone caractéristique dans l'unité de commande électronique (14), le champ caractéristique étant attribué à la gamme de valeurs de valeur de pression (p).

3. Procédé selon la revendication 1 ou 2, **caractérisé en ce que** le signal du capteur de pression (9) n'est défini comme non plausible que si l'écart de l'amplitude de valeur de pression (dU) par rapport à la valeur de comparaison dépasse un montant défini dans un nombre configurable de cas.

4. Procédé selon l'une quelconque des revendications 1-3, **caractérisé en ce que** l'unité de commande électronique (14) initie au moins une activité de réaction pour avertir le conducteur ou pour influencer une commande de moteur ou de freinage ou pour introduire un code d'erreur, si le signal du capteur de pression (9) est défini comme non plausible.

5. Procédé selon l'une quelconque des revendications 1-4, **caractérisé en ce que** le contrôle de vraisemblance est effectué en continu pendant le fonctionnement du groupe pompe (6).

6. Procédé selon l'une quelconque des revendications 1-2, **caractérisé en ce que** les valeurs de comparaison ou le champ caractéristique sont calculés ou enregistrés avant une première mise en marche du groupe pompe (6) et sont ultérieurement mémorisés dans l'unité de commande électronique (14).

7. Procédé selon l'une quelconque des revendications 1-2, **caractérisé en ce que** les valeurs de comparaison ou le champ caractéristique sont enregistrés pendant une première mise en marche du groupe pompe (6) et sont ultérieurement mémorisés dans l'unité de commande électronique (14).

8. Procédé selon l'une quelconque des revendications 1-2, **caractérisé en ce que** les valeurs de comparaison ou le champ caractéristique sont enregistrés pendant une première mise en marche du système de freinage et sont mémorisés dans l'unité de commande électronique (14).

9. Procédé selon l'une quelconque des revendications 1-8, **caractérisé en ce que** le contrôle de vraisemblance peut être suspendu pour une durée configurable.

10. Procédé selon la revendication 9, **caractérisé en ce que** le contrôle de vraisemblance est au moins suspendu pour une durée configurable
• lors de l'actionnement du servofrein (2) par un élément de commande (15) ou un autre groupe, ou
• lors d'une mise en marche du groupe pompe (6), ou
• lors d'un démarrage à froid d'un organe d'entraînement principal du véhicule automobile, ou
• lors de l'actionnement d'un frein à main, ou
• lors de l'enregistrement d'une sur- ou sous-tension ou d'une impulsion de tension dans un réseau électrique de bord du véhicule automobile.

11. Procédé selon la revendication 2, **caractérisé en ce que** le champ caractéristique comprend au moins une autre gamme de valeurs, dans laquelle sont contenues des valeurs :
• d'une pression extérieure appliquée, et/ou
• d'une température de pompe, et/ou
• d'une température ambiante, et/ou
• d'une tension dans un réseau électrique de bord du véhicule automobile, et/ou
• d'un courant dans un réseau électrique de bord du véhicule automobile, et/ou
• d'un nombre d'heures de fonctionnement du groupe pompe.

12. Groupe pompe pour exécuter le procédé selon la revendication 1, **caractérisé en ce que** le groupe pompe (6) dispose de deux éléments volumétriques (17,17') pouvant se déplacer de manière synchronisée dans le sens opposé, les éléments volumétriques (17,17') étant disposés dans un agencement de type boxer et comportant à leurs extrémités des éléments de membrane élastiques (23,23') et un capteur de pression individuel (9) étant prévu pour surveiller une différence de pression entre au moins une chambre arrière et au moins une chambre avant du servofrein (2) ou une pression régnant dans au moins une chambre avant du servofrein (2), ainsi que pour le contrôle de vraisemblance du signal du capteur de pression (9).
